# FASCICULE DE BREVET EUROPEEN

(11) **EP 1 447 264 B1**
(45) Date de publication et mention de la délivrance du brevet: **05.03.2008**
(21) Numéro de dépôt: 04300030.6
(22) Date de dépôt: 20.01.2004
(51) Int. Cl.: B60N 2/01

(54) **Agencement d'une rangée transversale de sièges individuels dans un habitacle de véhicule automobile entre deux passages de roue et siège latéral pour un tel agencement**
Anordnung einer tranversalen Reihe von Einzelsitzen im Innenraum eines Kraftfahrzeuges zwischen zwei Radhäusern und ein seitlicher Sitz für eine solche Anordnung.
Arrangement of a transversal row of individual seats in an automotive vehicle interior between two wheel-housings and a lateral seat for such an arrangement

(30) Priorité: 23.01.2003 FR 0300698
(43) Date de publication de la demande: 18.08.2004
(73) Titulaire: RENAULT S.A.S., 92100 Boulogne Billancourt (FR); ADAM OPEL AG, 65423 Rüsselsheim (DE)
(72) Inventeur: Michelin, Didier, 78950 Gambais (FR); Sinibardy, Frédéric, 92210 Saint Cloud (FR); Chomet, Jean-Gilles, 78000 Versailles (FR)
(74) Mandataire: Kohn, Philippe

(56) Documents cités:
- DE-C- 945 489
- DE-C- 19 652 939
- FR-A- 2 722 455
- US-A- 5 826 945
- US-A1- 2002 153 756
- US-B1- 6 416 116

## Description

L'invention concerne un siège individuel de véhicule automobile qui est agencé latéralement à l'extérieur dans une rangée transversale de sièges à côté d'un siège central.

L'invention concerne plus particulièrement un siège individuel de véhicule automobile qui est agencé latéralement à l'extérieur dans une rangée transversale de sièges, du type comportant une assise fixée sur une structure de soutien qui comprend notamment deux pieds latéraux, intérieur et extérieur, globalement verticaux dont les extrémités inférieures sont écartées transversalement, et dont les extrémités inférieures sont reliées au plancher du véhicule.

L'invention concerne aussi l'agencement d'un habitacle de véhicule automobile comportant une rangée transversale d'au moins deux sièges individuels comprenant un siège central qui est situé au centre par rapport à la largeur de l'habitacle, et comprenant au moins un siège latéral.

L'habitacle d'un véhicule automobile comporte couramment une première rangée de sièges avant constituée de deux sièges indépendants qui sont destinés à accueillir le conducteur et un passager, et une banquette transversale arrière qui est susceptible d'accueillir trois passagers.

Afin d'améliorer le confort individuel de chacun des passagers de la banquette arrière, il est connu de remplacer cette banquette par une rangée transversale de trois sièges individuels qui peuvent être montés coulissants longitudinalement par rapport au plancher du véhicule, c'est-à-dire que chaque passager peut régler individuellement, en fonction de sa morphologie, la position longitudinale de son siège, et, le cas échéant, l'angle d'inclinaison de son dossier, indépendamment de la posture des autres sièges de la rangée.

Pour les véhicules disposant d'un habitacle plus spacieux, tels que les véhicules du type "monospace", il est courant de proposer une troisième rangée transversale de places à l'arrière de l'habitacle.

Cependant, cette rangée transversale est située dans une zone généralement plus étroite en largeur, et par exemple entre deux passages de roue, la largeur disponible au plancher étant alors insuffisante pour implanter trois sièges individuels.

Ainsi, si l'on veut disposer d'une troisième rangée susceptible d'accueillir trois passagers, il est connu d'agencer une banquette transversale de trois places entre les passages de roue, au détriment du confort individuel des passagers et de la modularité du véhicule.

Pour privilégier le confort individuel des passagers, il est aussi connu de disposer dans cette troisième rangée transversale, à la place de la banquette, deux sièges individuels montés coulissants longitudinalement par rapport au plancher du véhicule.

Cependant, cette solution privilégie le confort individuel de chaque passager, mais elle diminue le nombre de places assises du véhicule.

Du document FR 2 722 455, on connaît un siège individuel, qui montre les caractéristiques du préambule de la revendication 1.

Afin de résoudre ce problème, l'invention propose un siège du type décrit précédemment caractérisé en ce que le bord latéral extérieur de l'assise est en porte-à-faux par rapport à l'extrémité supérieure du pied extérieur.

Selon d'autres caractéristiques de l'invention :
- l'extrémité inférieure du pied intérieur est décalée transversalement vers l'intérieur du véhicule par rapport à l'extrémité supérieure du pied intérieur ;
- le siège comporte des moyens de renfort de la structure de soutien ;
- les moyens de renfort comportent une barre transversale de renfort qui s'étend obliquement depuis l'extrémité supérieure du pied intérieur jusqu'à l'extrémité inférieure du pied extérieur ;
- les moyens de renfort comportent un élément de renfort de la rigidité de l'assise qui est agencé entre le bord en porte-à-faux et le pied extérieur, et qui est en appui sur le pied extérieur ;
- les extrémités inférieures des deux pieds latéraux sont montées coulissantes longitudinalement par rapport au plancher du véhicule.

L'invention concerne aussi un agencement d'un habitacle de véhicule automobile comportant une rangée transversale d'au moins deux sièges individuels comprenant un siège central qui est situé au centre par rapport à la largeur de l'habitacle, et comprenant au moins un siège latéral caractérisé en ce que le au moins un siège latéral est conforme aux enseignements de l'invention, et en ce que la rangée transversale s'étend entre deux passages de roue du véhicule.

Selon d'autres caractéristiques de l'invention :
- le pied extérieur du au moins un siège latéral est agencé de façon adjacente à un passage de roue, et en ce que le bord en porte-à-faux de l'assise du au moins un siège latéral s'étend au-dessus du passage de roue ;
- le siège central comporte deux pieds latéraux dont les extrémités supérieures sont chacune fixées sous un bord latéral de l'assise, et dont les extrémités inférieures sont situées au droit des extrémités supérieures ;
- chacun des sièges de la rangée transversale est monté coulissant individuellement longitudinalement par rapport au plancher du véhicule automobile ;
- la rangée transversale comporte trois sièges.

D'autres caractéristiques et avantages de l'invention apparaîtront au cours de la lecture de la description détaillée qui va suivre, pour la compréhension de laquelle on se reportera aux dessins annexés parmi lesquels :
- la figure 1 est une vue de dessus représentant schématiquement un véhicule du type monospace qui est équipé d'une deuxième rangée transversale traditionnelle de trois sièges, et qui est équipé d'une troisième rangée transversale arrière réalisée selon les enseignements de l'invention ;
- la figure 2 est une vue schématique de derrière de la deuxième rangée traditionnelle de trois sièges de la figure 1 ;
- la figure 3 est une vue similaire à celle de la figure 2 qui représente schématiquement la troisième rangée transversale arrière de trois sièges individuels de la figure 1 dont les deux sièges latéraux sont réalisés selon les enseignements de l'invention.

Dans la description qui suit, on utilisera à titre non limitatif une orientation longitudinale, verticale, et transversale selon le trièdre direct L, V, T représenté aux figures.

Des éléments similaires, analogues ou identiques décrits par la suite seront désignés par les mêmes références.

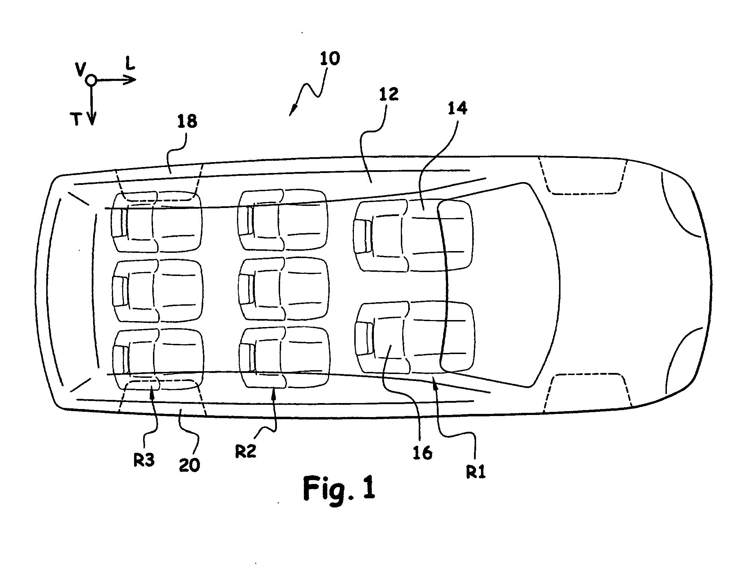

On a représenté à la figure 1 un véhicule 10 de type monospace. Ce véhicule 10 comporte un habitacle 12 suffisamment spacieux pour comporter trois rangées transversales R1, R2, et R3 de sièges.

La première rangée R1 est située à l'avant de l'habitacle 12. Elle comporte ici un premier siège 14 de gauche destiné à accueillir le conducteur du véhicule 10 et un second siège de droite 16 destiné à accueillir un passager.

Derrière cette première rangée avant R1, se trouve la deuxième rangée centrale R2. La rangée R2 comporte trois sièges individuels qui sont par exemple montés coulissants longitudinalement par rapport au plancher du véhicule 10 et dont chacun est destiné à accueillir un passager. De façon connue, cette rangée transversale R2 s'étend transversalement dans une zone dans laquelle la largeur de l'habitacle 12 n'est pas limitée, par exemple par des passages de roues.

Le véhicule 10 comporte derrière la seconde rangée R2, une troisième rangée arrière R3 de trois sièges individuels dont les deux sièges latéraux sont réalisés conformément aux enseignements de l'invention de façon que cette rangée R3 soit agencée transversalement entre deux passages de roue latéraux arrières gauche 18 et droit 20 du véhicule 10.

Les passages de roue 18 et 20 sont des logements qui abritent la partie supérieure des roues arrière (non représentées) du véhicule 10. Ces passages de roue 18 et 20 empiètent dans le volume sensiblement parallélépipédique de l'habitacle 12 au niveau du plancher 40.

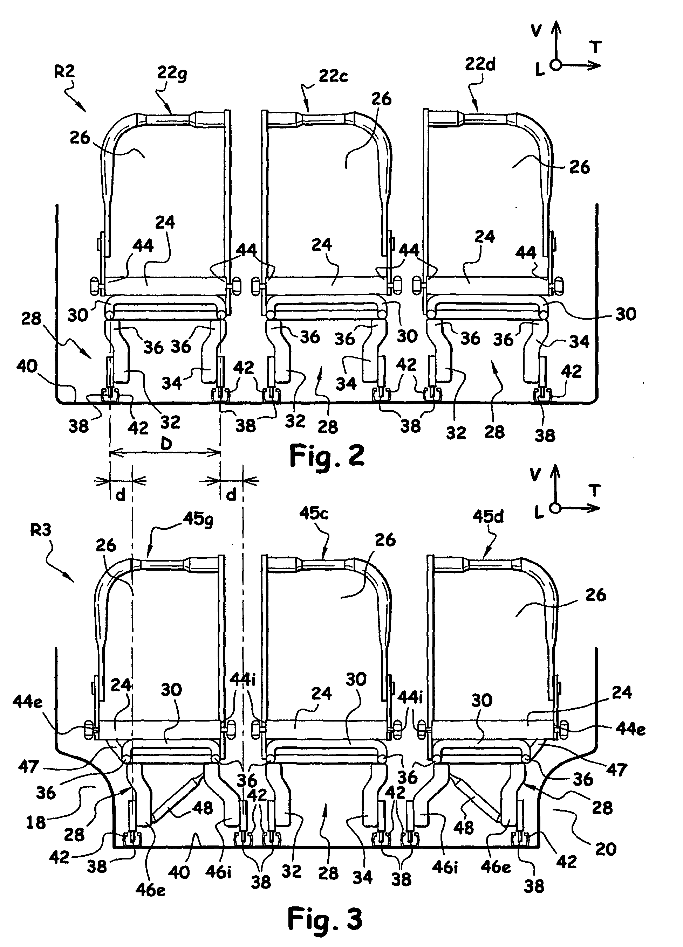

On a représenté plus précisément à la figure 2 un exemple connu de réalisation d'une rangée R2 de trois sièges individuels qui s'étendent transversalement sur toute la largeur de l'habitacle 12.

Cette rangée R2 comporte trois sièges référencés 22g, 22c, et 22d de gauche à droite en considérant la figure 2. Ces trois sièges 22g, 22c, 22d sont sensiblement identiques. La description s'appliquera donc indifféremment aux sièges 22g, 22c et 22d.

Chaque siège 22g, 22c, ou 22d, comporte une assise 24 horizontale, ou coussin, qui est destinée à supporter le poids du passager.

Un dossier vertical 26 destiné à soutenir le dos du passager s'étend verticalement depuis un bord arrière de l'assise. Le dossier 26 est généralement monté pivotant par rapport à l'assise 24 autour d'un axe transversal afin que le passager puisse régler l'inclinaison du dossier par rapport à l'assise.

L'assise 24 du siège 22d, 22c, ou 22g est reliée au plancher 40 par l'intermédiaire d'une structure de soutien 28. La structure de soutien 28 comprend notamment une armature horizontale rigide 30 qui s'étend sous une face inférieure de l'assise 24. La structure de soutien 28 comprend aussi deux pieds latéraux gauche 32 et droit 34 qui maintiennent l'assise 24 au-dessus du plancher 40 du véhicule 10.

L'extrémité supérieure 36 de chaque pied 32, 34 est fixée à l'armature rigide 30 sous un bord latéral 44 de l'assise 24, et leur extrémité inférieure 38 est en appui sur le plancher 40 du véhicule 10.

Les extrémités inférieures 38 des pieds 32, 34 de chaque siège 22g, 22c, 22g sont ici montées coulissantes longitudinalement dans des rails longitudinaux 42 qui sont fixés au plancher du véhicule 10.

Le siège 22g, 22c, 22d comporte des moyens (non représentés) pour bloquer le coulissement longitudinal du siège dans les rails 42, qui sont commandés par le passager.

Comme représenté à la figure 2, l'extrémité inférieure 38 de chaque pied 32, 34 et leur extrémité supérieure 36 sont sensiblement alignées verticalement avec le bord latéral 44 associé de l'assise 24.

Cependant, une telle rangée transversale R2 de trois sièges 22g, 22c, 22d, ne peut être agencée entre deux passages de roue 18 et 20 du véhicule 10. En effet, comme représenté à la figure 3, la présence des passages de roue 18 et 20 empiète sur la place transversale nécessaire pour l'implantation des rails 42 les plus proches des parois latérales du véhicule 10, ou plus généralement des points d'ancrage de l'extrémité inférieure 38 des pieds 32, 34 des sièges latéraux 22g et 22d.

On décrira à présent la rangée de sièges R3 réalisée selon les enseignements de l'invention, et qui est agencée transversalement entre les passages de roue 18 et 20.

Les trois sièges de la rangée transversale R3 sont référencés 45g, 45c, et 45d de gauche à droite en considérant la figure 3.

Le siège central 45c est situé sensiblement au milieu de la largeur de l'habitacle 12. De façon connue, il est analogue aux sièges 22g, 22c, 22d déjà décrits et représentés à la figure 2.

En revanche, les deux sièges latéraux gauche 45g et droite 45d sont réalisés selon les enseignements de l'invention.

Les deux sièges latéraux 45g et 45d sont symétriques par rapport au plan sagittal du véhicule 10, c'est-à-dire le plan longitudinal et vertical médian. Seul le siège de gauche 45g sera décrit en détails et sa description sera applicable au siège de droite 45d.

Le siège 45g comporte une assise horizontale 24 et un dossier vertical 26 similaires à ceux des sièges 22 réalisés selon l'état de la technique. Le siège 45g comporte aussi une structure de soutien 28 comprenant une armature horizontale 30 fixée sous la face inférieure de l'assise 24, et deux pieds latéraux intérieur 46i et extérieur 46e. Les pieds 46i et 46e maintiennent l'assise 24 au-dessus du plancher 40.

L'extrémité inférieure 38 de chaque pied 46i et 46e est aussi montée coulissante longitudinalement par rapport au plancher 40 dans des rails 42.

Dans la suite de la description, nous appellerons pied extérieur 46e d'un siège latéral 45g ou 45d, le pied qui est voisin du passage de roue 18 ou 20, et nous appellerons pied intérieur 46i, le pied voisin du siège central 45c.

Le pied extérieur 46e a ici une structure similaire à celle des pieds 32, 34 réalisés selon l'état de la technique, c'est-à-dire que son extrémité inférieure 38 est sensiblement alignée verticalement avec son extrémité supérieure 36.

Cependant, le pied extérieur 46e n'est pas aligné verticalement avec le bord latéral extérieur 44e de l'assise 24. En effet, du fait de la place prise par le passage de roue 18, le pied 46e est décalé transversalement sous l'assise 24, vers l'intérieur par rapport au bord latéral extérieur 44e de l'assise 24 d'une distance d qui est ici globalement égale à un quart de la largeur de l'assise 24.

Ainsi, le bord latéral extérieur 44e de l'assise 24 s'étend au-dessus du passage de roue 18, mais il n'est pas directement soutenu par le pied 46e. Le bord extérieur latéral 44e de l'assise 24 est donc en porte-à-faux par rapport au pied extérieur 44e, c'est-à-dire qu'une partie du poids du passager est supportée par le bord latéral 44e lorsque le passager est assis normalement sur le siège 45g.

L'armature rigide 30 qui supporte l'assise 24 du siège latéral 45g comporte donc un élément de renfort 47 qui s'étend entre le bord latéral extérieur 44e en porte-à-faux de l'assise 24 et l'extrémité supérieure 36 du pied extérieur 46e, afin d'augmenter la rigidité de l'armature 30g, 30d. L'élément de renfort 47 est en appui sur le pied extérieur 46e de façon à pouvoir transmettre des efforts depuis le bord de l'assise 24 jusqu'à l'extrémité supérieure 36 du pied extérieur 46e.

A l'instar des sièges 22g, 22c ou 22d réalisés selon l'état de la technique, l'extrémité supérieure 36 du pied intérieur 46i est sensiblement alignée verticalement avec le bord latéral intérieur 44i de l'assise 24. De manière à préserver la stabilité du siège 45g par rapport au plancher 40 du véhicule 10, il est nécessaire de conserver un écartement minimal D entre les extrémités inférieurs 38 du pied extérieur 46e et du pied intérieur 46i respectivement. Cet écartement D est ici sensiblement le même que l'écartement entre les deux pieds 32 et 34 d'un siège 22 réalisé selon l'état de la technique.

De façon à pouvoir relier l'armature rigide 30 avec le rail 42 intérieur, le pied 46i a sensiblement une forme de "S".

Ainsi, l'extrémité inférieure 38 du pied inférieur 46i est décalée de la distance d vers l'intérieur du véhicule 10 par rapport à l'extrémité supérieure 36 qui est alignée verticalement avec le bord latéral intérieur 44i de la l'assise 24.

Cependant, étant donné que l'extrémité supérieure 36 et l'extrémité inférieure 38 du pied ne sont pas alignées verticalement, le pied 46i est soumis à des contraintes internes qui sont susceptibles de le déformer.

La structure de soutien 28 comporte donc une barre oblique 48 de renfort du pied 46i qui s'étend depuis l'extrémité supérieure 36 du pied intérieur 46i jusqu'à l'extrémité inférieure 38 du pied extérieur 46e.

Cette barre de renfort 48 est destinée à soutenir le pied intérieur 46i afin d'éviter toute déformation ou rupture éventuelle du pied due au non-alignement de son extrémité inférieure 38 avec l'extrémité supérieure 36.

Selon une variante non représentée de l'invention, l'écartement D entre les extrémités inférieures 38 du pied extérieur 46e et du pied intérieur 46i est inférieur à la largeur de l'assise 24 de manière que l'extrémité supérieure 36 du pied intérieur 46i soit alignée verticalement avec son extrémité inférieure 38.

Lorsqu'un passager s'installe sur le siège central 45c, son poids est transmis de l'assise 24 au plancher 40 du véhicule 10 directement par l'intermédiaire des pieds gauche 32 et droit 34.

Selon la convenance du passager, ce siège 45c peut être avancé ou reculé indépendamment des sièges latéraux 45g et 45d en faisant coulisser l'extrémité inférieure 38 des pieds 32 et 34 dans les rails 42.

A cet effet, le passager dispose d'un mécanisme de commande individuel (non représenté).

Lorsqu'un passager utilise l'un des deux sièges latéraux 45g ou 45d, son poids est transmis de l'assise 24 jusqu'au plancher 40 par l'intermédiaire de la structure de soutien 28.

Ainsi, son poids est transmis par le pied extérieur 46e, et par le pied intérieur 46i. L'élément de renfort 47 transmet les efforts qui s'exercent sur le bord en porte-à-faux de l'assise 24 jusqu'à l'extrémité supérieure 36 du pied extérieur 46e.

Une partie des efforts transmis par le pied intérieur 46i est déviée vers le pied extérieur 46e par l'intermédiaire de la barre oblique 48. Ainsi, le pied intérieur 46i transmet sensiblement moins d'efforts que le pied extérieur 46e.

Selon la convenance du passager installé sur le siège 45g ou 45d, il est possible de régler la position longitudinale de ce dernier en faisant coulisser l'extrémité inférieure 38 des pieds 46e et 46i dans les rails 42, de la même manière que pour les sièges 22d, 22c, 22g réalisés selon l'état de la technique. A cet effet, le passager dispose d'un mécanisme de commande individuel (non représenté) du coulissement longitudinal de son siège 45g ou 45d.

Lorsque le siège 45g ou 45d coulisse longitudinalement, le bord extérieur latéral 44e de l'assise 24 se déplace au-dessus du passage de roue 18 ou 20.

Selon une variante non représentée de l'invention, la troisième rangée transversale R3 comporte un siège central 45c et seulement un siège latéral 45d ou 45g.

Selon une autre variante non représentée de l'invention, le pied extérieur 46e et l'élément de renfort 47 sont réalisés venus de matière.

## Revendications

1. Siège individuel (45g, 45d) de véhicule automobile (10) qui est agencé latéralement à l'extérieur dans une rangée transversale de sièges (R3), du type comportant une assise (24) fixée sur une structure de soutien (28) qui comprend notamment deux pieds latéraux, intérieur (46i) et extérieur (46e), globalement verticaux dont les extrémités inférieures (38) sont écartées transversalement d'une distance (D), et sont reliées au plancher (40) du véhicule (10),
**caractérisé en ce que** le bord latéral extérieur (44e) de l'assise (24) est en porte-à-faux par rapport à l'extrémité supérieure (36) du pied extérieur (46e).

2. Siège selon la revendication précédente, **caractérisé en ce que** l'extrémité inférieure (38) du pied intérieur (46i) est décalée transversalement vers l'intérieur du véhicule (10) par rapport à l'extrémité supérieure (36) du pied intérieur (46i).

3. Siège (45d, 45g) selon l'une quelconque des revendications précédentes, **caractérisé en ce qu**'il comporte des moyens de renfort (47, 48) de la structure de soutien (28).

4. Siège (45d, 45g) selon la revendication précédente prise en combinaison avec la revendication 2, **caractérisé en ce que** les moyens de renfort comportent une barre transversale de renfort (48) qui s'étend obliquement depuis l'extrémité supérieure (36) du pied intérieur (46i) jusqu'à l'extrémité inférieure (38) du pied extérieur (46e).

5. Siège (45d, 45g) selon l'une des revendications 3 ou 4 prise en combinaison avec la revendication 1, **caractérisé en ce que** les moyens de renfort comportent un élément de renfort (47) de la rigidité de l'assise (24) qui est agencé entre le bord en porte-à-faux (44e) et le pied extérieur (46e), et qui est en appui sur le pied extérieur (46e).

6. Siège (45d, 45g) selon l'une des revendications précédentes, **caractérisé en ce que** les extrémités inférieures (38) des deux pieds latéraux (46i, 46e) sont montées coulissantes longitudinalement par rapport au plancher (40) du véhicule (10).

7. Agencement d'un habitacle (12) de véhicule automobile (10) comportant une rangée transversale d'au moins deux sièges individuels (R3) comprenant un siège central (45c) qui est situé au centre par rapport à la largeur de l'habitacle (12), et comprenant au moins un siège latéral (45g, 45d),
**caractérisé en ce que** le au moins un siège latéral (45d, 45g) est conforme aux revendications 1 à 6, et **en ce que** la rangée transversale (R3) s'étend entre deux passages de roue (18, 20) du véhicule (10).

8. Agencement selon la revendication précédente, **caractérisé en ce que** le pied extérieur (46e) du au moins un siège latéral (45d, 45g) est agencé de façon adjacente à un passage de roue (18, 20), et **en ce que** le bord en porte-à-faux (44e) de l'assise (24) du au moins un siège latéral (45d, 45g) s'étend au-dessus du passage de roue (18, 20).

9. Agencement selon l'une des revendications 7 ou 8, **caractérisé en ce que** le siège central (45c) comporte deux pieds latéraux (32, 34) dont les extrémités supérieures (36) sont chacune fixées sous un bord latéral (44) de l'assise (24), et dont les extrémités inférieures (38) sont situées au droit des extrémités supérieures (36).

10. Agencement selon la revendication précédente, **caractérisé en ce que** chacun des sièges (45d, 45c, 45g) de la rangée transversale (R3) est monté coulissant individuellement longitudinalement par rapport au plancher (40) du véhicule automobile (10).

11. Agencement selon l'une des revendications 7 à 10, **caractérisé en ce que** la rangée transversale (R3) comporte trois sièges.

12. Agencement selon la revendication précédente, **caractérisé en ce que** les deux sièges latéraux (45d, 45g) sont globalement symétriques par rapport au siège central (45c).

## Claims

1. Individual seat (45g, 45d) of an automotive vehicle (10), which is arranged at the outer side of a transverse row of seats (R3), of the type comprising a seat part (24) fixed to a support structure (28) which comprises in particular a generally vertical inner lateral foot (46i) and a generally vertical outer lateral foot (46e), of which the lower ends (38) are transversely separated by a distance (D) and are connected to the floor (40) of the vehicle (10),
**characterised in that** the outer lateral edge (44e) of the seat part (24) overhangs relative to the upper end (36) of the outer foot (46e).

2. Seat according to the preceding claim, **characterised in that** the lower end (38) of the inner foot (46i) is shifted transversely towards the inside of the vehicle (10) relative to the upper end (36) of the inner foot (46i).

3. Seat (45d, 45g) according to any one of the preceding claims, **characterised in that** it comprises reinforcement means (47, 48) for the support structure (28).

4. Seat (45d, 45g) according to the preceding claim in combination with claim 2, **characterised in that** the reinforcement means comprise a transverse reinforcement rod (48), which extends obliquely from the upper end (36) of the inner foot (46i) to the lower end (38) of the outer foot (46e).

5. Seat (45d, 45g) according to either claim 3 or claim 4 in combination with claim 1, **characterised in that** the reinforcement means comprise a reinforcement element (47) to reinforce the rigidity of the seat part (24), which is located between the overhanging edge (44e) and the outer foot (46e) and which is in contact with the outer foot (46e).

6. Seat (45d, 45g) according to any one of the preceding claims, **characterised in that** the lower ends (38) of the two lateral feet (46i, 46e) are mounted so as to slide longitudinally in relation to the floor (40) of the vehicle (10).

7. Arrangement of an interior (12) of an automotive vehicle (10) comprising a transverse row (R3) of at least two individual seats, including a central seat (45c) situated centrally in relation to the width of the interior (12), and including at least one lateral seat (45g, 45d),
**characterised in that** the at least one lateral seat (45d, 45g) is in accordance with claims 1 to 6 and **in that** the transverse row (R3) extends between two wheel arches (18, 20) of the vehicle (10).

8. Arrangement according to the preceding claim, **characterised in that** the outer foot (46e) of the at least one lateral seat (45d, 45g) is arranged adjacent to a wheel arch (18, 20) and **in that** the overhanging edge (44e) of the seat part (24) of the at least one lateral seat (45d, 45g) extends above the wheel arch (18, 20).

9. Arrangement according to either claim 7 or claim 8, **characterised in that** the central seat (45c) comprises two lateral feet (32, 34) each of the upper ends (36) of which is fixed under a lateral edge (44) of the seat part (24) and the lower ends (38) of which are situated in line with the upper ends (36).

10. Arrangement according to the preceding claim, **characterised in that** each of the seats (45d, 45c, 45g) in the transverse row (R3) is attached so as individually to slide longitudinally in relation to the floor (40) of the automotive vehicle (10).

11. Arrangement according to any one of claims 7 to 10, **characterised in that** the transverse row (R3) comprises three seats.

12. Arrangement according to the preceding claim, **characterised in that** the two lateral seats (45d, 45g) are generally symmetrical relative to the central seat (45c).

## Patentansprüche

1. Einzelsitz (45g, 45d) eines Kraftfahrzeugs (10), der seitlich außen in einer Querreihe von Sitzen (R3) angeordnet ist, vom Typ, aufweisend eine Grundplatte (24), die an einer Haltestruktur (28) befestigt ist, die insbesondere zwei seitliche, insgesamt vertikale Füße, einen inneren (46i) und einen äußeren (46e), umfasst, deren untere Enden (38) quer um einen Abstand (D) beabstandet sind, und die am Boden (40) des Fahrzeugs (10) verbunden sind, **dadurch gekennzeichnet, dass** der äußere Seitenrand (44e) der Grundplatte (24) bezogen auf das obere Ende (36) des äußeren Fußes (46e) fliegend gelagert ist.

2. Sitz nach Anspruch 1, **dadurch gekennzeichnet, dass** das untere Ende (38) des inneren Fußes (46i) quer in Richtung auf das Fahrzeuginnere (10) bezogen auf das obere Ende (36) des inneren Fußes (46i) versetzt ist.

3. Sitz (45d, 45g) nach einem der vorstehenden Ansprüche, **dadurch gekennzeichnet, dass** er Mittel (47, 48) zur Verstärkung der Haltestruktur (28) aufweist.

4. Sitz (45d, 45g) nach dem vorstehenden Anspruch in Kombination mit Anspruch 2, **dadurch gekennzeichnet, dass** die Verstärkungsmittel eine Verstärkungsquerstange (48) aufweisen, die sich schräg vom oberen Ende (36) des inneren Fußes (46i) bis zum unteren Ende (38) des äußeren Fußes (46e) erstreckt.

5. Sitz (45d, 45g) nach Anspruch 3 oder 4 in Kombination mit Anspruch 1, **dadurch gekennzeichnet, dass** die Verstärkungsmittel ein Verstärkungselement (47) der Steifigkeit der Grundplatte (24) aufweisen, das zwischen dem fliegend gelagerten Rand (44e) und dem äußeren Fuß (46e) angeordnet und an dem äußeren Fuß (46e) in Anlage ist.

6. Sitz (45d, 45g) nach einem der vorstehenden Ansprüche, **dadurch gekennzeichnet, dass** die unteren Enden (38) der beiden seitlichen Füße (46i, 46e) längs verschiebbar bezogen auf den Boden (40) des Fahrzeugs (10) angebracht sind.

7. Karosseriegehäuseanordnung (12) eines Kraftfahrzeugs (10), aufweisend eine Querreihe von zumindest zwei Einzelsitzen (R3), die einen mittleren Sitz (45c) umfasst, der in der Mitte bezogen auf die Breite des Karosseriegehäuses (12) liegt, und mindestens einen seitlichen Sitz (45g, 45d) umfasst, **dadurch gekennzeichnet, dass** zumindest ein seitlicher Sitz (45d, 45g) den Ansprüchen 1 bis 6 entspricht und dass sich die Querreihe (R3) zwischen zwei Radläufen (18, 20) des Fahrzeugs (10) erstreckt.

8. Anordnung nach dem vorstehenden Anspruch, **dadurch gekennzeichnet, dass** der äußere Fuß (46e) des zumindest einen seitlichen Sitzes (45d, 45g) angrenzend an einen Radlauf (18, 20) angeordnet ist und dass sich der fliegend gelagerte Rand (44e) der Grundfläche (24) des zumindest einen seitlichen Sitzes (45d, 45g) oberhalb des Radlaufs (18, 20) erstreckt.

9. Anordnung nach Anspruch 7 oder 8, **dadurch gekennzeichnet, dass** der mittlere Sitz (45c) zwei seitliche Füße (32, 34) aufweist, deren obere Enden (36) jeweils unter einem seitlichen Rand (44) der Grundplatte (24) befestigt sind und deren untere Enden (38) senkrecht zu den oberen Enden (36) stehen.

10. Anordnung nach dem vorstehenden Anspruch, **dadurch gekennzeichnet, dass** ein jeder der Sitze (45d, 45c, 45g) der Querreihe (R3) längs individuell verschiebbar bezogen auf den Boden (40) des Kraftfahrzeugs (10) angebracht ist.

11. Anordnung nach einem der Ansprüche 7 bis 10, **dadurch gekennzeichnet, dass** die Querreihe (R3) drei Sitze aufweist.

12. Anordnung nach dem vorstehenden Anspruch, **dadurch gekennzeichnet, dass** die beiden seitlichen Sitze (45d, 45g) insgesamt symmetrisch bezogen auf den mittleren Sitz (45c) sind.
